(19) Europäisches Patentamt
European Patent Office
Office européen des brevets

(11) **EP 2 099 703 B1**

(12) **EUROPEAN PATENT SPECIFICATION**

(45) Date of publication and mention of the grant of the patent:
**24.07.2013 Bulletin 2013/30**

(21) Application number: **07835053.5**

(22) Date of filing: **24.09.2007**

(51) Int Cl.:
*B21D 43/20* (2006.01)   *B21D 43/24* (2006.01)
*B65H 3/24* (2006.01)   *B65H 3/56* (2006.01)

(86) International application number:
**PCT/SE2007/000838**

(87) International publication number:
**WO 2008/039129 (03.04.2008 Gazette 2008/14)**

(54) **A METHOD AND A DEVICE FOR SEPARATING OF MAGNETIC AND NON-MAGNETIC BLANKS PLACED IN A STACK.**

VERFAHREN UND VORRICHTUNG ZUR TRENNUNG VON IN EINEM STAPEL PLATZIERTEN MAGNETISCHEN UND NICHTMAGNETISCHEN ROHLINGEN

PROCÉDÉ ET DISPOSITIF DESTINÉS À SÉPARER DES ÉBAUCHES MAGNÉTIQUES ET NON MAGNÉTIQUES DISPOSÉES DANS UNE PILE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.09.2006 SE 0602004**

(43) Date of publication of application:
**16.09.2009 Bulletin 2009/38**

(73) Proprietor: **Bengtsson, Brodde**
**293 72 Jämshög (SE)**

(72) Inventor: **Bengtsson, Brodde**
**293 72 Jämshög (SE)**

(74) Representative: **Strandin, Heléne et al**
**Bergenstråhle & Lindvall AB**
**P.O. Box 117 04**
**118 93 Stockholm (SE)**

(56) References cited:
**JP-A- 61 027 847**   **JP-A- 2001 205 373**
**JP-U- 57 120 532**   **US-A- 3 669 445**
**US-A- 3 697 303**   **US-A- 4 465 415**

## Description

The present invention refers to a method and a device for separating magnetic and non-magnetic mainly plane sheet- or disc-shaped blanks piece by piece, such as plates of steel and aluminum, which constitute a stack and other plane blanks e.g. sheets of plastic and so on which are piled up in similar stacks and which usually are placed on a pallet or rack. Such devices are disclosed in JP2001205373 and US3669445. The invention comprises a movement means in order to separate piece by piece and lift up one or more edges of these blanks by aid of a separating unit, which is gripping the edge of the uppermost blank and when needed the movement means is also feeding in an air beam between the actual blanks in order to eliminate vacuum between the same, which speeding up the separation by giving the uppermost blank a lifting force of that air cushion, which in this case is achieved between the blanks. When the separated blank has been lifted away from this collecting position, usually by aid of suction cups, the next blank is separated and so on piece by piece in a continuous process until the stack of blanks in principle is emptied.

By automation of presses separate blanks are often fetched from a stack of blanks where separate blanks are stacked directly one upon the other on a pallet. Said pallet is often larger than the stack and usually provided with locating pins, which guarantees that the position of the stack on said pallet and which also prevent the blanks to slip during transport. When taking out a blank for further processing in a press some kind of feeding means is used, usually suction pillows or the like. When the blanks have been separated piece by piece they are one by one transported to a centering means, where they are carefully determined of position and from where they thereafter are fed into the press. Provided that the position of the stack is carefully known the blanks can eventually be fed directly into the press. During later years owing to increased environment demands and higher energy prices the development has been moved forwards resulting in that new and lighter materials to an ever increasing extent are used within the vehicle industry and this has led to that more aluminum materials and plastic materials, i.e. non-magnetic materials have started to be used and this is expected to increase strongly in the near future. At the same time as also the material prices are increased strongly, you have, in order to put a stop to the material cost during later years, increased the use of formed cut blanks, so that one obtains more blanks from one blank area, which saves material and lowers the material cost. This means that a separation piece by piece of non magnetic blanks having strongly angles and curve formations are desirable, something which the technology of today does not manages by aid of fanner magnets, compressed air or wide screwed formed arrangements. Separating magnets can only be used on magnetic materials and cannot be used on non-magnetic materials or blanks. Only compressed air cannot separate between upper or under lying blanks, but penetrate into where it already exist a small. slit between the blanks, independent of what blank it is in order and can also nevertheless create a separation of two, three or more blanks at the same time. There is nothing which control that the separation occurs with only one blank at the time.

Wide screw formed arrangements require large planar and parallel opposite areas and therefore can only tolerably be used on quadratic and rectangular blanks and are already of this reason useless on formation cut blanks. These arrangements are also space <u>requiring when the</u> screws drive the blanks laterally, so that space requiring holding up tools must be installed in order to stop this. It also required a space much below the separating level, which creates problems when the blank pallets often are larger than these blanks, which are stacked on the pallet. The pallet prevents in this way the separation of blanks in the lower portion of the stack, so that a larger number of blanks usually will not be picked up but have to leave the plant for time requiring manual actions. These screw formed arrangements consist of threads or thread similar grooves, which do not grasp the blank but the blank slips in the threads, which often create not wanted chips on the blanks, which causes quality problems of the finished product. By that fact that aluminum oxide also wears very hard on these thread groves and which requires frequent and expensive exchanges and besides causes production stops to a cost which is far too much, this method is not useable under production like forms in a modem production.

The object of the present invention is to provide a separating device, which in an excellent way fulfils its purpose at the same time as it besides is both cheap and simple to manufacture. Another object of the present invention is also to provide a method for a safe and effective separating of magnetic and non magnetic blanks of sheet e.g. aluminum piece by piece from a stack of blanks with that demand that the method is not limited to mainly quadratic and rectangular blanks having parallel opposite areas, but can also handle that during the last years increased use of form cut blanks. Besides the claim of compactness exists, so that a small space need can be met at the same time as the separating device does not have any physical portions which extend below that level on which the stack of blanks are placed upon. This gives the blank separating device further a very much valuable and unique quality i.e. it has also as one of the main purposes to be available duririg modifying older, existing equipments constructed only for separating magnetic and more or less quadratic blanks, so that they can manage also non magnetic form cut blanks also if that plane, which the stack of blanks is placed upon is larger than the plane of the stack of blanks, which is not allowed to be any obstacle for grasping of the blanks after said reconstruction.

Another fundamental object of the invention is to prevent that slipping starts or that the mechanical grasping of the uppermost blank looses its grasp, so that chips are formed or that small particles are loosen from the blank when it shall be separated. This is solved by this invention by an unique trigonometry, which is adjusting the grasping of the teeth in relation to that force which is needed to separate and lift the uppermost blank of the blank stack. Another object of the invention is to provide a simple and robust structure, which is the reason for that a continuous operation can be realized during long periods of time and that the costs are kept within acceptable limits.

By these features a good separating can be made by a moving means to separate piece by piece and to lift up one or more edges of blanks, which also comprise non magnetic and form cut blanks, by aid of teeth or spines and when needed the device can shoot in an air beam in order to eliminate that vacuum which can exist between the two uppermost blanks. The blank separators can also by their compact design, as mentioned above, be used during reconstruction of existing equipment, which gives considerable cost savings.

The invention will now be described closer below in detail by reference to the accompanying drawings, in which

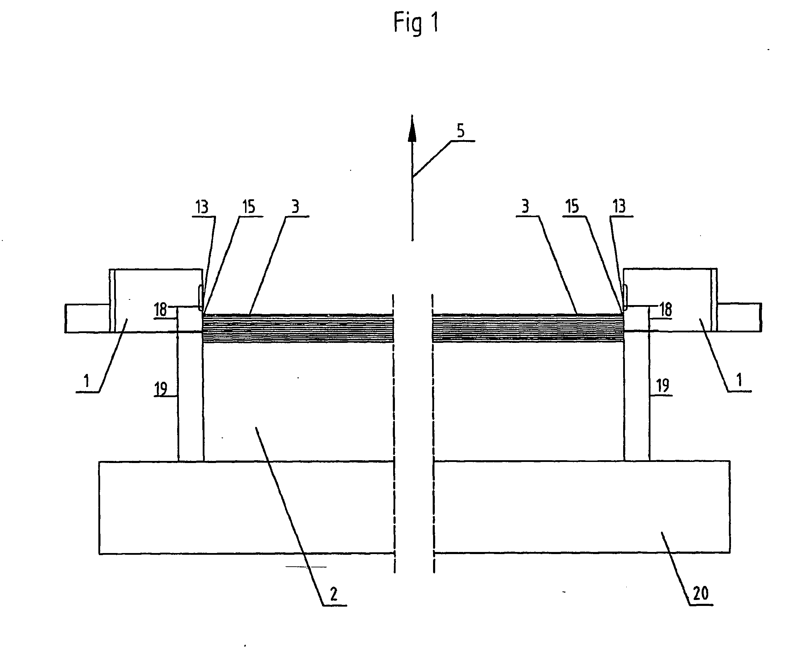

fig. 1      shows a schematic side view of the device according to the invention,

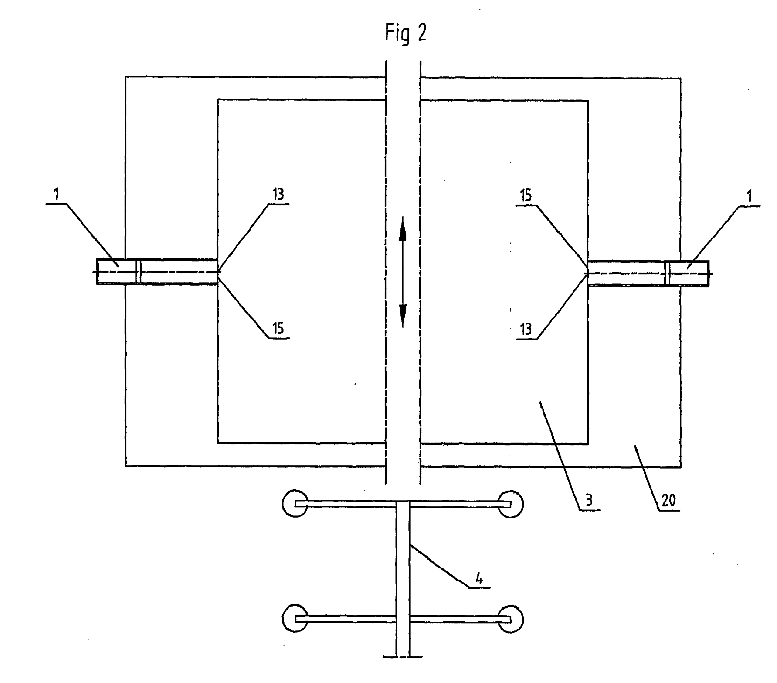

fig. 2      shows a view from above of fig. 1,

fig. 3      shows a side view in detail having a partial section of the blank separator during the starting moment, from the home position, according to the invention,

fig. 4      shows a side view in detail having a partial section of the blank separator during the grasping phase,

fig. 5      shows a side view in detail having a partial section of the blank separator during the end of the separating phase,

fig. 6      shows a side view in detail having a partial section of the blank separator during the stopping moment of the return to the home position,

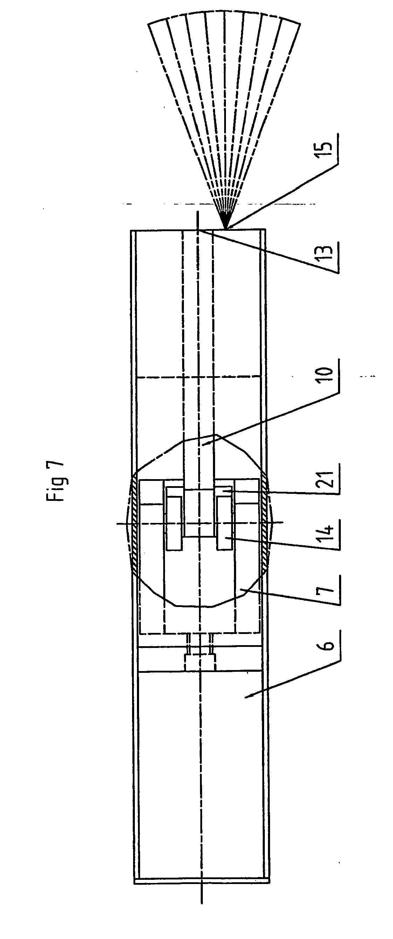

fig. 7      shows a view from above having a partial section of the blank separator,

fig. 8      shows an end view having a partial section, viewed from the blank stack of the blank separator,

fig. 9      shows a side view in detail having a partial section of the blank separator where the separating arm is guided by through pins in milled curves in the sides of the slide, and

fig. 10      shows an end view of fig. 9 having a partial section, viewed from the blank stack of the blank separator.

As can be seen from the drawings the invention consists of at least blank separator or separating unit 1 and in the illustrated example of two separating units 1, contacting against an upper edge portion of that stack 2 of blanks 3, which shall be separated from each other, so that by this adherence between the objects, caused by vacuum, oil film or by other reasons, is stopped, so that the upper most blank in the stack 2 can be caught by a picking means 4 for feeding the blanks into a following machine not illustrated in the drawings. An intended separating direction 5 is parallel to or mainly parallel to a normal to the extension plane of the blanks 3.

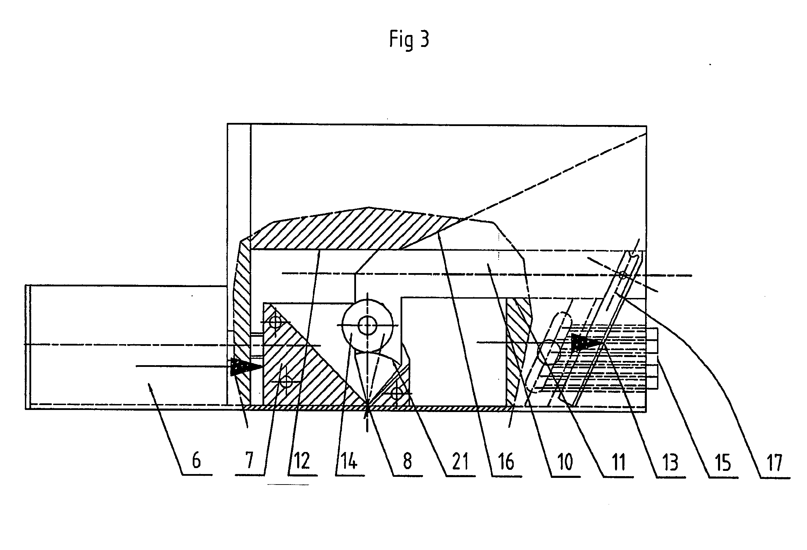

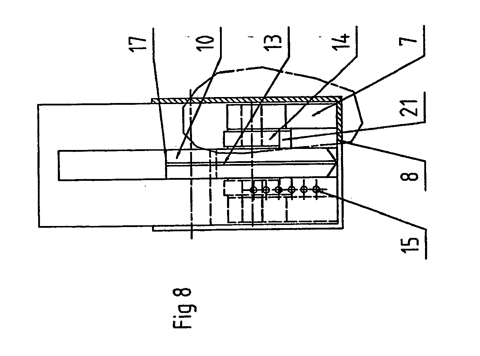

Fig. 8 shows an end view illustrated from the blank stack. From this is evident that the free end or edge of a separating arm 10 comprises at least one friction surface and which in the example illustrated consists of a narrow blade 13 provided with teeth or point projections, said blade by aid of its sharp teeth can grasp the upper blank of the stack 2. Here is also illustrated the separating arm 10 in its protected home position 17 (see also Fig. 3) and a curve 21 provided on the separating arm 10, which abuts against a bearing 14, so that the distance to its theoretical bearing point 8 in a slide 7 always in constant. In the view according to Fig. 8 also those openings, which via an unique channel system causes an air beam 15, which quickly eliminates the vacuum between the two upper blanks and gives the upper most separated blank a lifting force.

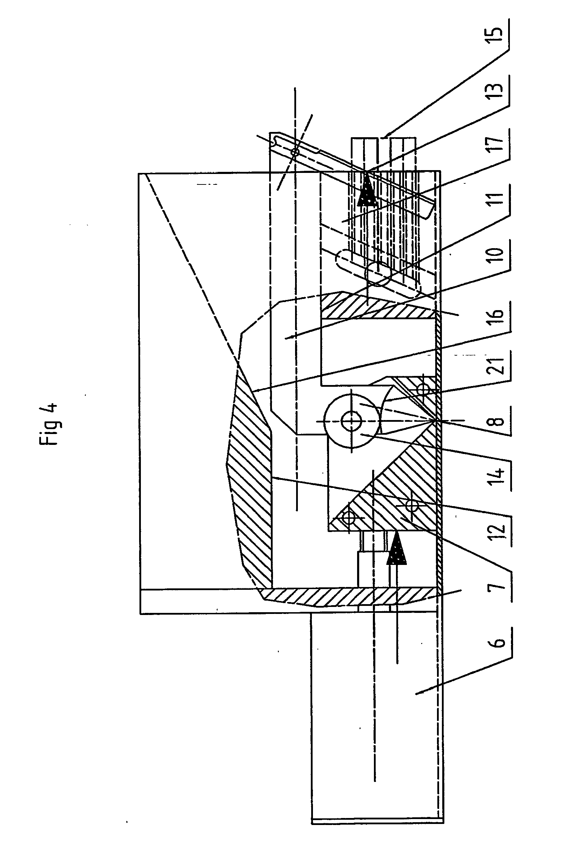

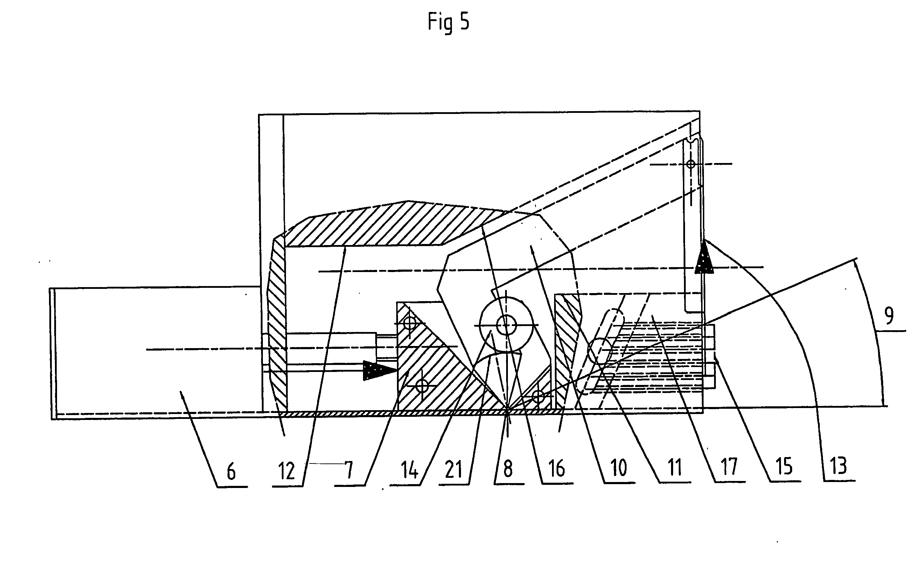

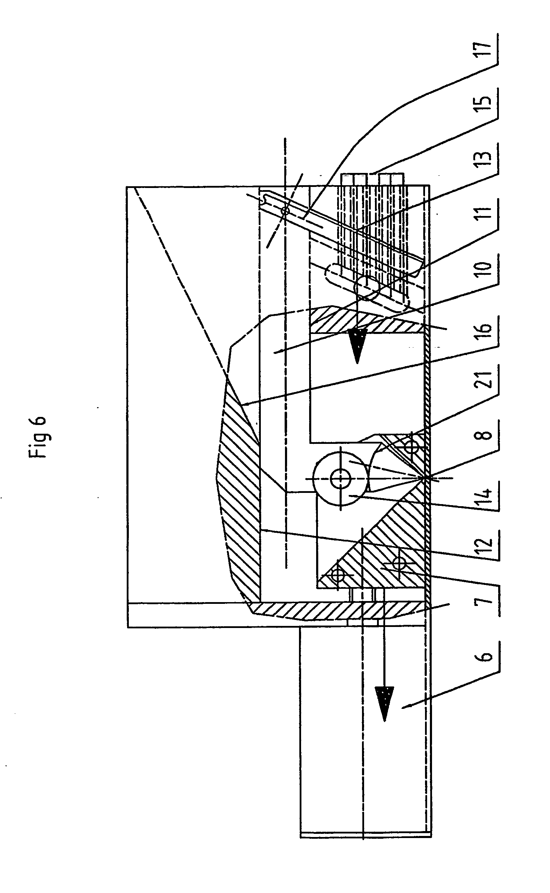

Fig. 3 - 6 describe a working cycle for a separating unit 1 according to the invention. A driving unit 6 has as a task to drive a controlled slide 7 in a movement forwards and backwards and which slide 7 has a theoretic bearing point 8 peculiar for the invention. Said curve 21 on the separating arm 10 has its theoretical bearing point 8 and its own axis center placed outside the body of the separating unit 1 or at the most 5 mm inwards from the underside of the body of the separating unit 1. One feature for the theoretical bearing point 8 of this curve 21 is that it has an angle 9, which is between 0 and 90° to the horizontal plane or the extension plane for the uppermost blank of the blank stack. The separating arm 10 is driven in this bearing point 8 by aid of said slide 7 together with its blade 13 firmly provided in its free end in a predetermined angle in a oscillation for the separation of blanks by aid of said blade 13. The separating arm 10 with its blade 13 is kept down against the bearing point 8 in that the separating arm 10 comprises in it back, lower end, said curve 21, which supports against the bearing 14 mounted in the slide 7. The separating arm 10 is, in the example illustrated, also guided by slide surfaces 11 and 12, so that it first is displaced horizontally until the narrow blade 13 is leaving its home position, said blade 13 is mounted on the separating arm 10 and is provided with teeth and pointed projections, which s typical for the invention and is loosen from the upper slide surface 12 and by one of its sharp teeth grasp the uppermost blank of the stack 2. An upwards directed force is now also constituted in relation to the size of the sinus on the angle 9, which also is secant on the angle 9, which is the inverted value of cos of the angle 9 i.e. the quotient of the hypotenuse and the closely allied cathetus on the created triangle.

$$\sec A = \frac{c}{b} \qquad \sin A = \frac{a}{c}$$

sec A = Secant on the angle 9
c = Hypotenuse
b = Closely allied cathetus
a = Opposite cathetus

In this position the separating arm 10 is free from the upper slide surface 12 but guided on the curve 21 by the bearing 14 and via the bearing point 8 influenced by the driving unit 6 in one in this position driving force directed forwards. This force-tregometric relation between the different force-composites provides a further feature for the invention, namely, that the gripping arm in the tooth provided narrow blade 13 distinctly is gripping in within a position in the area between the upper and the next upper blank 3 of the stack 2 or immediate below with different and with one after each condition adapted force in relation to which lifting force needed to separate and lift up the uppermost blank of the blank stack. When the separating arm 10 shall start its lifting movement the function air beam 15 or not can have been chosen, which determines if an air beam 1 shall be used or not in order to quicker eliminate the vacuum between the two upper blanks. Independent of if the function air beam 15 has been chosen or not, the separating arm 10 being moved, now guided by the bearing point 8 and the bearing 14 pressing against the curve 21 and the above mentioned force-tregometric relation created by the angle 9, between the different force-composites in a direction to a plane 16 at the same time as the teeth provided, narrow blade 13 is keeping its grasp in the blank edge on the uppermost blank of the stack, which at this moment is separated from the underlying blank and because of that also joins the way upwards. In this leaving position the blank is separated and is handed over to any type of picking up means 4 for feeding into a subsequent machine, so that also the function air beam 15 is shut off if it has been used during the separation. When the teeth provided, narrow blade 13 has left over the blank to the picking up means 4 the driving unit 6 its returning movement and pull back the force guided slide 7, which via the bearing point 8 pulls the separating arm 10 backwards, so that the upper slide surface 12 is letting the separating arm 10 down and thereafter returns to the home position 17.

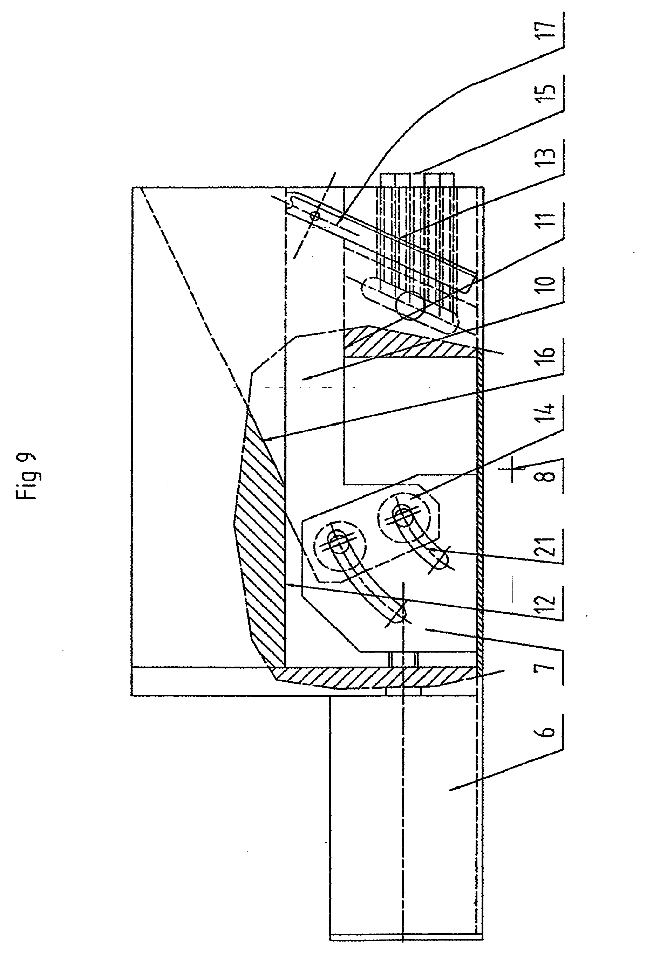

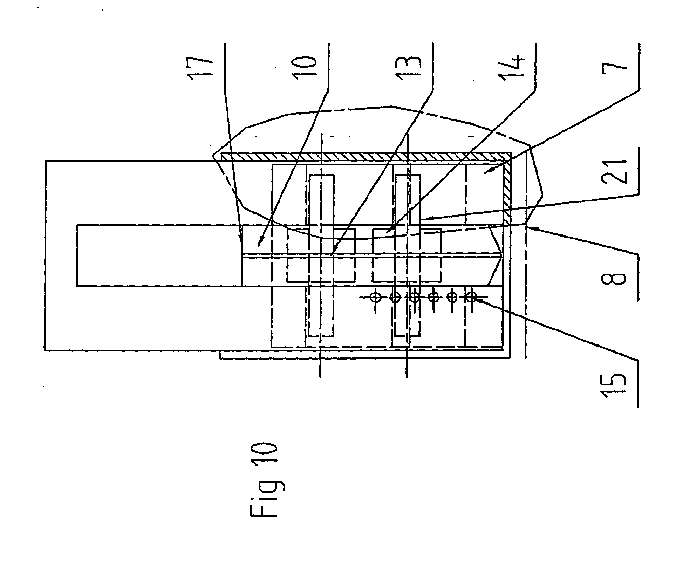

In Fig. 9 and 10 examples are illustrated of another type of curve 21, which gives similar movement pattern for the separating arm 10 and its blade 13. Here double bearings 14 are instead used in the separating arm 10 having through running pins, which thereafter are guiding in milled curves 21 in the form of curve grooves in the sides of the slide 7.

**Claims**

1. A method for separating piece by piece of magnetic and non-magnetic mainly plane sheet- or disc-shaped blanks (3), such as plates of steel, aluminum, plastic sheets and the like, which are piled up in a stack (2) by aid of at least one separating unit (1), wherein a driving unit (6) in said separating unit (1) actuates a slide (7) displaceable in the same, which in turn actuates a separating arm (10) having at least one friction surface in its front, free end and which hereby is pushed out from said separating unit (1) in a movement direction, which is mainly 90° to the side plane of said blank stack (2) in both directions, **characterized in that** when said friction surface, forming an angle to the side plane of the blank stack (2), is contacting a blank (3), the separating arm (10) turns in the slide (7) a predetermined angle at the same time as the first point on the friction surface has reached the blank stack (2) and thanks to formation of its angle only contacts the uppermost blank (3) of the stack (2), the friction from the friction surface of the separating arm is gripping the uppermost blank when that point of the friction surface, which has grasped the blank (3), changes its movement direction in order thereafter to follow that movement direction which then is possible, which is mainly in parallel to the side plane of the stack (2) and which is also the separating direction of the blank (3) in separating the upper most blank (3) of the stack (2) from the underlying blanks.

2. A device for carrying out a method for separating piece by piece of magnetic and non-magnetic mainly plane sheet- or disc-shaped blanks (3), such as plates of steel, aluminum, plastic sheets and the like, which are piled up in a stack (2) by aid of a at least one separating unit (1), wherein the separating unit (1) comprises a slide (7) displaceable by a driving unit (6) in a movement forwards and backwards, which in turn actuates a separating arm (10), which in its front, free, outer end is provided with an angled blade (13) having one or a several friction surfaces, **characterized in that** which separating arm (10) is guided in said slide and can be protruded from the separating unit (1) in a movement direction, which is mainly 90° to the side plane of the blank stack (2) in both directions in separating a blank (3) from the blank stack (2), wherein the movement of the separating arm (10) is guided in the slide (7) via a curve (21) provided on the end portion of the arm (10) at the same time as said arm (10) is kept down against a bearing point (8) in the slide (7) by aid of a bearing (14) mounted in the slide (7), against which the curve (21) supports.

3. A device according to claim 2, **characterized in that** the friction surface or surfaces of the separating arm (10) consist of narrow, toothed or point provided saw blades or saw blade formed projections formed on an angled blade (13) fixed to the free end of the arm (10), said blade (13) is provided to distinctly catch by aid of one of its sharp teeth into a point in the area between the upper most and the next upper most blank (3) of the stack or directly under.

4. A device according to claim 3, **characterized in that** the blade (13), which is provided to catch the blank (3), is formed narrow and is preferably one or some millimeters thick, which increases the accessibility for the blade (13) to reach in sharp comers and has in this way the unique possibility that it can separate strongly formed cut blanks.

5. A device according to claim 2, **characterized in that** the movement of the separating arm (10) is guided in said slide (7) via at least one curve (21) in the form of curve grooves provided the sides of the slide by aid of bearings (14) provided in the end portion of the separating arm (10) said bearings having through pins, guided in said curve grooves.

6. A device according to claim 5, **characterized in that** the curve (21) has its theoretical bearing point (8) and its own axes center placed outside both its own body and the one of the separating unit (1) or at the highest 5 mm inwards from the lower side of the own body of the separating unit (1), which makes a separating of blanks downwards to the corresponding level possible.

7. A device according to any of the claims 2-6, **characterized in that** the stack (2) is step by step adjustable (18) upwards in relation to the separating unit (1) or that the separating unit (1) is step by step adjustable (18) downwards in relation to the blank stack (2) in order to obtain an optimal accommodation afterwards as the stack is used (19), until the separating unit (1) meets the support (20), on which the stack is placed, whereby in this (bottom) position the separating unit (1) continuous to separate blanks right downwards to that of the following conditions, which occurs first either down to the stated "theoretical bearing point (8)" or to that support (20), whereupon the blank stack (2) is placed.

8. A device according to any of the claims 2-7, **characterized in that** a force-trigonometric relation between different force components are causing that the gripping tooth in the tooth provided narrow blade (13)-distinctly is catching into a point in the-area between the uppermost and the next uppermost blank of the blank stack (2) or immediately below with a force adapted automatically to one for each circumstance in relation to which lifting force, which is needed, in order to separate an lift up the uppermost blank of the blank stack (2).

9. A device according to any of the claims 2-8, **characterized in that** the combination of the saw blade formed friction surface (13) and air can be used by that an air beam (15) can be inserted between the blanks to hasten the break apart of the adhering forces between the blanks and to eliminate eventual vacuum between the two uppermost blanks in speeding up the separation by giving the uppermost blank a lifting force of that air cushion, which in this case is achieved between the blanks.

**Patentansprüche**

1. Verfahren zum stückweisen Trennen von magnetischen und nichtmagnetischen hauptsächlich ebenen tafel- oder scheibenförmigen Zuschnitten (3), beispielsweise Platten aus Stahl, Aluminium, Kunststofftafeln und Ähnlichem, die in einem Stapel (2) gestapelt sind, mithilfe von mindestens einer Trenneinheit (1), wobei eine Antriebseinheit (6) in der Trenneinheit (1) einen Schieber (7) betätigt, der in derselben verschiebbar ist, der wiederum einen Trennarm (10) betätigt, der mindestens eine Reibungsfläche an seinem vorderen, freien Ende aufweist und der hierdurch aus der Trenneinheit (1) in eine Bewegungsrichtung gedrückt wird, die hauptsächlich 90° zur Seitenebene des Zuschnittstapels (2) in beiden Richtungen liegt, **dadurch gekennzeichnet, dass** wenn die Reibungsfläche, die einen Winkel zur Seitenebene des Zuschnittstapels (2) bildet, einen Zuschnitt (3) berührt, der Trennarm (10) sich in dem Schieber (7) zur gleichen Zeit um einen festgelegten Winkel dreht, wie der erste Punkt an der Reibungsfläche den Zuschnittstapel (2) erreicht hat, und dank der Bildung seines Winkels nur den obersten Zuschnitt (3) des Stapels (2) berührt, die Reibung von der Reibungsfläche des Trennarms den obersten Zuschnitt greift, wenn dieser Punkt der Reibungsfläche, die den Zuschnitt (3) gegriffen hat, seine Bewegungsrichtung ändert, um danach der Bewegungsrichtung zu folgen, die dann möglich ist, die hauptsächlich parallel zu der Seitenebene des Stapels (2) verläuft und die auch die Trennrichtung des Zuschnitts (3) beim Trennen des obersten Zuschnitts (3) des Stapels (2) von den darunterliegenden Zuschnitten ist.

2. Vorrichtung zum Durchführen eines Verfahrens zum stückweisen Trennen von magnetischen und nichtmagnetischen hauptsächlich ebenen tafel- oder scheibenförmigen Zuschnitten (3), beispielsweise Platten aus Stahl, Aluminium, Kunststofftafeln und Ähnlichem, die in einem Stapel (2) gestapelt sind, mithilfe von mindestens einer Trenneinheit (1), wobei die Trenneinheit (1) einen Schieber (7) umfasst, der von einer Antriebseinheit (6) in einer Vorwärts- und Rückwärtsbewegung verschiebbar ist, der wiederum einen Trennarm (10) betätigt, der an seinem vorderen, freien, äußeren Ende mit einem abgewinkelten Blatt (13) mit einer oder mehreren Reibungsflächen versehen ist, **dadurch gekennzeichnet, dass** der Trennarm (10) in dem Schieber geführt ist und beim Trennen eines Zuschnitts (3) vom Zuschnittstapel (2) aus der Trenneinheit (1) in eine Bewegungsrichtung herausgeschoben werden kann, die hauptsächlich 90° zur Seitenebene des Zuschnittstapels (2) in beiden Richtungen liegt, wobei die Bewegung des Trennarms (10) in dem Schieber (7) über eine Kurve (21), die an dem Endabschnitt des Arms (10) vorgesehen ist, zur gleichen Zeit, wie der Arm (10) nach unten an einem Auflagerpunkt (8) in dem Schieber (7) gehalten wird, mittels eines in dem Schieber (7) montierten Lagers (14) geführt wird, an dem sich die Kurve (21) abstützt.

3. Vorrichtung nach Anspruch 2, **dadurch gekennzeichnet, dass** die Reibungsfläche oder -flächen des Trennarms (10) aus schmalen, gezahnten oder mit Spitzen versehenen Sägeblättern oder sägeblattförmigen Vorsprüngen bestehen, die an einem abgewinkelten Blatt (13) ausgebildet sind, das an dem freien Ende des Arms (10) befestigt ist, das Blatt (13) vorgesehen ist, um mittels einem seiner scharfen Zähne in eine Stelle in dem Bereich zwischen dem obersten und dem zweitobersten Zuschnitt (3) des Stapels oder direkt darunter separat einzugreifen.

4. Vorrichtung nach Anspruch 3, **dadurch gekennzeichnet, dass** das Blatt (13), das vorgesehen ist, um den Zuschnitt (3) zu greifen, schmal ausgebildet ist und vorzugsweise einen oder einige Millimeter stark ist, was die Fähigkeit des Blatts (13) verbessert, in scharfe Kanten zu gelangen, und auf diese Weise die einzigartige Möglichkeit hat, stabil geformte geschnittene Zuschnitte zu trennen.

5. Vorrichtung nach Anspruch 2, **dadurch gekennzeichnet, dass** die Bewegung des Trennarms (10) in dem Schieber (7) über mindestens eine Kurve (21) in Form von Kurvennuten, die in den Seiten des Schiebers angeordnet sind, mittels Lagern (14) geführt ist, die an dem Endabschnitt des Trennarms (10) angeordnet sind, wobei die Lager durchgehende Stifte aufweisen, die in den Kurvennuten geführt sind.

6. Vorrichtung nach Anspruch 5, **dadurch gekennzeichnet dass** der theoretische Auflagerpunkt (8) und der eigene Achsmittelpunkt der Kurve (21) sowohl außerhalb des eigenen Körpers als auch des Körpers der Trenneinheit (1) oder höchstens 5 mm von der Unterseite des eigenen Körpers der Trenneinheit (1) aus nach innen angeordnet sind, was das Trennen von Zuschnitten nach unten bis zu der entsprechenden Höhe ermöglicht.

7. Vorrichtung nach einem der Ansprüche 2 bis 6, **dadurch gekennzeichnet, dass** der Stapel (2) stufenweise nach oben bezogen auf die Trenneinheit (1) einstellbar (18) ist oder dass die Trenneinheit (1) stufenweise nach unten bezogen auf den Zuschnittstapel (2) einstellbar (18) ist, um danach eine optimale Anpassung zu erreichen, wenn der Stapel verwendet wird (19), bis die Trenneinheit (1) auf den Träger (20) trifft, auf dem der Stapel platziert ist, wodurch in dieser (unteren) Position die Trenneinheit (1) Zuschnitte bis zu der von den folgenden Bedingungen direkt nach unten weiter trennt, die als erstes eintritt, entweder nach unten bis zu dem angegebenen "theoretischen Auflagerpunkt (8)" oder bis zu dem Träger (20), auf dem der Zuschnittstapel (2) platziert ist.

8. Vorrichtung nach einem der Ansprüche 2 bis 7, **da-durch gekennzeichnet, dass** eine trigonometri-sche Kraftbeziehung zwischen verschiedenen Kraft-komponenten bewirkt, dass der Greifzahn in dem mit Zähnen versehenen schmalen Blatt (13) in eine Stelle in dem Bereich zwischen dem obersten und dem zweitobersten Zuschnitt des Zuschnittstapels (2) oder direkt darunter mit einer Kraft separat eingreift, die automatisch an eine für jede Lage bezogen auf die Hubkraft angepasst ist, die benötigt wird, um den obersten Zuschnitt von dem Zuschnittstapel (2) zu trennen und hochzuheben.

9. Vorrichtung nach einem der Ansprüche 2 bis 8, **dadurch gekennzeichnet, dass** die Kombination aus der von dem Sägeblatt gebildeten Reibungsfläche (13) und Luft verwendet werden kann, mit der ein Luftstrahl (15) zwischen die Zuschnitte eingebracht werden kann, um das Aufbrechen der Haftkräfte zwischen den Zuschnitten zu beschleunigen und um ein mögliches Vakuum zwischen den beiden obersten Zuschnitten zu beseitigen, indem die Trennung beschleunigt wird, indem dem obersten Zuschnitt eine Hubkraft dieses Luftkissens verliehen wird, die in diesem Fall zwischen den Zuschnitten erreicht wird.

**Revendications**

1. Procédé destiné à séparer une par une des ébauches magnétiques et non magnétiques (3) principalement planes en forme de feuille ou de disque, telles que des plaques d'acier, d'aluminium, des feuilles de plastique et similaires, qui sont empilées dans une pile (2) à l'aide d'au moins une unité de séparation (1), dans lequel une unité d'entraînement (6) dans ladite unité de séparation (1) actionne un coulisseau (7) pouvant être déplacé dans celle-ci, qui à son tour actionne un bras de séparation (10) présentant au moins une surface de frottement dans son extrémité avant libre et qui est ainsi poussé hors de ladite unité de séparation (1) dans une direction de mouvement, qui est principalement à 90° par rapport au plan latéral de ladite pile (2) d'ébauches dans les deux directions, **caractérisé en ce que** quand ladite surface de frottement, formant un angle par rapport au plan latéral de la pile (2) d'ébauches, touche une ébauche (3), le bras de séparation (10) tourne dans le coulisseau (7) selon un angle prédéterminé en même temps que le premier point sur la surface de frottement atteint la pile (2) d'ébauches et, grâce à la formation de son angle, touche uniquement l'ébauche la plus haute (3) de la pile (2), le frottement de la surface de frottement du bras de séparation saisit l'ébauche la plus haute quand ce point de la surface de frottement, qui a agrippé l'ébauche (3), change sa direction de mouvement afin de suivre ensuite cette direction de mouvement qui est alors possible, qui est principalement parallèle au plan latéral de la pile (2) et qui est également la direction de séparation de l'ébauche (3) en séparant l'ébauche la plus haute (3) de la pile (2) des ébauches sous-jacentes.

2. Dispositif pour exécuter un procédé destiné à séparer une par une des ébauches magnétiques et non magnétiques (3) principalement planes en forme de feuille ou de disque, telles que des plaques d'acier, d'aluminium, des feuilles de plastique et similaires, qui sont empilées dans une pile (2) à l'aide d'au moins une unité de séparation (1), dans lequel l'unité de séparation (1) comprend un coulisseau (7) pouvant être déplacé par une unité d'entraînement (6) dans un mouvement avant et arrière, qui à son tour actionne un bras de séparation (10), qui à son extrémité externe avant libre est pourvu d'une lame angulaire (13) présentant une ou plusieurs surfaces de frottement, **caractérisé en ce que** ledit bras de séparation (10) est guidé dans ledit coulisseau et peut être avancé hors de l'unité de séparation (1) dans une direction de mouvement, qui est principalement à 90° par rapport au plan latéral de la pile (2) d'ébauches dans les deux directions en séparant une ébauche (3) de la pile (2) d'ébauches, dans lequel le mouvement du bras de séparation (10) est guidé dans le coulisseau (7) par une courbe (21) prévue sur la partie d'extrémité du bras (10) en même temps que ledit bras (10) est maintenu en bas contre un point d'appui (8) dans le coulisseau (7) à l'aide d'un palier (14) monté dans le coulisseau (7), contre lequel la courbe (21) appuie.

3. Dispositif selon la revendication 2, **caractérisé en ce que** la surface ou les surfaces de frottement du bras de séparation (10) consistent en des lames de scie étroites, dentées ou pourvues de pointes ou en des saillies en forme de lame de scie formées sur une lame angulaire (13) fixée à l'extrémité libre du bras (10), ladite lame (13) est prévue pour, à l'aide de l'une de ses dents pointues, venir en prise distinctement dans un point dans la zone entre l'ébauche (3) la plus haute et la deuxième ébauche la plus haute de la pile ou directement en dessous.

4. Dispositif selon la revendication 3, **caractérisé en ce que** la lame (13), qui est prévue pour attraper l'ébauche (3), est formée étroite et est de préférence épaisse d'un ou de quelques millimètres, ce qui augmente l'accessibilité pour la lame (13) lui permettant de s'étendre dans des coins pointus et présente de cette manière la capacité unique de pouvoir séparer des ébauches découpées formées solides.

5. Dispositif selon la revendication 2, **caractérisé en ce que** le mouvement du bras de séparation (10) est guidé dans ledit coulisseau (7) via au moins une courbe (21) sous forme de rainures incurvées prévues dans les côtés du coulisseau à l'aide de paliers (14) prévus dans la partie d'extrémité du bras de séparation (10), lesdits paliers présentant des tiges traversantes, guidées dans lesdites rainures incurvées.

6. Dispositif selon la revendication 5, **caractérisé en ce que** la courbe (21) présente son point d'appui théorique (8) et son propre centre d'axe placés à l'extérieur aussi bien de son propre corps que de celui de l'unité de séparation (1) ou maximum 5 mm vers l'intérieur depuis le côté inférieur du propre corps de l'unité de séparation (1), ce qui permet une séparation d'ébauches vers le bas jusqu'au niveau correspondant.

7. Dispositif selon l'une quelconque des revendications 2 à 6, **caractérisé en ce que** la pile (2) peut être ajustée (18) pas à pas vers le haut par rapport à l'unité de séparation (1) ou **en ce que** l'unité de séparation (1) peut être ajustée (18) pas à pas vers le bas par rapport à la pile (2) d'ébauches afin d'obtenir un ajustement optimal ensuite lorsque la pile est utilisée (19), jusqu'à ce que l'unité de séparation (1) rencontre le support (20), sur lequel la pile est disposée, ce par quoi dans cette position (inférieure) l'unité de séparation (1) continue à séparer des ébauches directement vers le bas jusqu'à celle des conditions suivantes qui se produit en premier, soit jusqu'au "point d'appui théorique (8)" mentionné, soit jusqu'au support (20) sur lequel la pile (2) d'ébauches est disposée.

8. Dispositif selon l'une quelconque des revendications 2 à 7, **caractérisé en ce qu'**une relation trigonométrique de force entre différents composants de force amène la dent de saisie dans la lame étroite (13) pourvue de dents à venir en prise distinctement dans un point dans la zone entre l'ébauche la plus haute et la deuxième ébauche la plus haute de la pile (2) d'ébauches ou immédiatement en dessous avec une force adaptée automatiquement à chaque circonstance par rapport à la force de levage qui est nécessaire pour séparer et soulever l'ébauche la plus haute de la pile (2) d'ébauches.

9. Dispositif selon l'une quelconque des revendications 2 à 8, **caractérisé en ce que** la combinaison de la surface de frottement (13) formée en lame de scie et d'air peut être utilisée avec laquelle un jet d'air (15) peut être introduit entre les ébauches pour accélérer la rupture des forces d'adhérence entre les ébauches et pour éliminer un vide éventuel entre les deux ébauches les plus hautes en accélérant la séparation en donnant à l'ébauche la plus haute une force de levage de ce coussin d'air, qui dans ce cas est obtenu entre les ébauches.

# Fig 1

EP 2 099 703 B1

Fig 2

Fig 3

Fig 4

Fig 5

EP 2 099 703 B1

6  12  7  14  21  8  16  10  11  17  15  13  9

Fig 6

Fig 7

15

Fig 8

Fig 9

6   7   12   21   8   14   16   10   11   13   15   17

EP 2 099 703 B1

EP 2 099 703 B1

Fig 10

17

10

13

14

15  8  21  7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001205373 B

- US 3669445 A